(19)

Europäisches
Patentamt
European
Patent Office
Office européen
des brevets

(11) **EP 2 326 945 B1**

(12) **EUROPEAN PATENT SPECIFICATION**

(45) Date of publication and mention
of the grant of the patent:
**14.12.2016 Bulletin 2016/50**

(51) Int Cl.:
***G01N 27/28*** *(2006.01)*      ***G01N 27/416*** *(2006.01)*
***G01N 33/487*** *(2006.01)*      ***G01N 33/96*** *(2006.01)*

(21) Application number: **09785446.7**

(86) International application number:
**PCT/GB2009/050976**

(22) Date of filing: **04.08.2009**

(87) International publication number:
**WO 2010/018394 (18.02.2010 Gazette 2010/07)**

(54) **CALIBRATION SOLUTION PACKAGING METHOD AND CALIBRATION SOLUTION PACKAGE**

EICHLÖSUNGSVERPACKUNGSVERFAHREN UND EICHLÖSUNGSPACKUNG

PROCÉDÉ DE CONDITIONNEMENT D'UNE SOLUTION D'ÉTALONNAGE ET CONDITIONNEMENT
POUR SOLUTION D'ÉTALONNAGE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **15.08.2008   GB 0814929**

(43) Date of publication of application:
**01.06.2011   Bulletin 2011/22**

(73) Proprietor: **SPHERE Medical Limited
Cambridge, Cambridgeshire CB22 7GG (GB)**

(72) Inventors:
• **TOWNSEND, Christopher, Andrew
Cambridgeshire CB22 7GG (GB)**

• **LAITENBERGER, Peter, Georg
Cambridgeshire CB22 7GG (GB)**
• **WICKS, Benjamin
Cambridgeshire CB22 7GG (GB)**

(74) Representative: **Zijlstra, Robert Wiebo Johan
Elkington and Fife LLP
Prospect House
8 Pembroke Road
Sevenoaks, Kent TN13 1XR (GB)**

(56) References cited:
**EP-A- 0 689 050      US-A- 4 116 336
US-A- 5 077 036**

**Description**

FIELD OF THE INVENTION

The present invention relates to a method of packaging a calibration solution for a blood chemistry sensor.

The present invention further relates to a calibration solution package for such a sensor.

BACKGROUND OF THE INVENTION

The analysis of arterial and venous blood chemistry in the critical care environment is an important aspect of critical care medicine. It is common for measurements of arterial blood gases such as oxygen and carbon dioxide, electrolytes such as potassium and metabolites such as glucose to be carried out every few hours in the intensive care unit. Arterial or venous blood is normally drawn into a heparinised syringe and taken to a nearby analyser or sent to a centralized laboratory, where it is analysed with respect to the concentration of a range of analytes.

The instruments used to analyze blood, examples of which include blood gas analysers (BGAs), typically require frequent calibration to ensure that the measurements of one or more sensors in such instruments are accurate. As a consequence, a great deal of effort has been devoted to finding convenient, reliable and cost effective means of providing calibration solutions for blood gas analysers. One area of particular challenge is providing calibration solutions which contain accurate amounts of dissolved gases, in particular oxygen and carbon dioxide. Unlike most constituents of a calibration solution, dissolved gases are able to migrate through permeable packaging materials. This can lead to changes in the dissolved gas concentration over time which can give rise to inaccurate calibration of the analyser and consequently inaccurate measurement results. In some circumstances, changes in temperature and pressure can also alter the concentration of dissolved gases in a liquid.

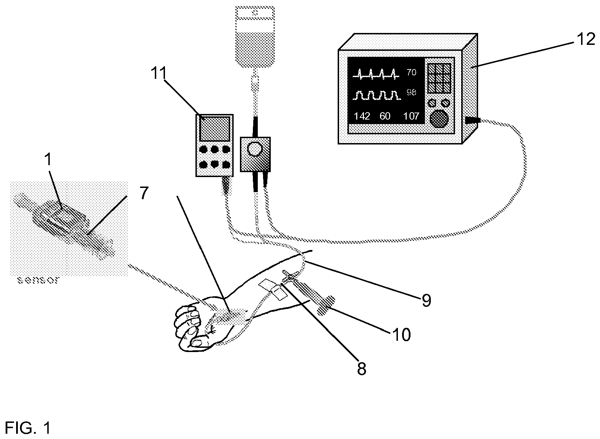

Diagnostic tests in hospitals may also be carried out at the point-of-care (PoC), in particular, in situations, where a rapid response is a prime consideration and therapeutic decisions have to be made quickly. This has led to the development of a range of analysers which can be used near the patient or which are even patient-attached. One example of such an instrument is shown in Figure 1. The instrument shown in Figure 1 is a disposable blood gas/electrolyte micro-analyser system, which may be attached to a patient in the critical care environment and may be used to measure arterial or venous blood chemistry over a predefined time period, e.g. a three-day period. The system is equipped with a housing 7 incorporating the sensor 1 coupled to a sampling port 8 in an intravascular line 9 above the sensor 1. A sampling device 10, for example a syringe, is coupled to the sampling port 8. Using the sampling device 10, the user, e.g. a medical professional, will withdraw blood flushing it across the sensor 1 in order to take a measurement. After the measurement is completed, the blood may be flushed back into the patient or it may be flushed to waste. In another embodiment, the sensor can be incorporated into the intravascular-flushing line, for example, along with one or more other sensors, such as a pressure sensor. Samples may be taken either periodically, regularly, event-driven, on demand or following a user intervention.

The sensor 1 is connected to a local display and signal processing unit 11, which may be connected to a patient-monitoring device 12. The sensor 1 is also electronically connected to the housing 7 using techniques known in the art.

Chemical sensors are inherently subject to changes in their response to the analyte or analytes of interest, generally caused by a change over time in the sensitivity of the sensor to the analyte, a change in baseline response, diffusional changes or other interfering factors. For any measurement system, which includes such a sensor, to perform accurately, it therefore has to be calibrated, i.e., have its readings referenced to a known standard. For such sensors, this usually takes the form of relating the sensor response to precisely controlled concentrations of the analyte of interest, creating a "calibration curve" prior to sampling, to which all subsequent readings are referenced.

Hence, it will be apparent that in order to provide measurements with a point-of-care and/or patient-attached analyser or any other chemical and electrochemical measurement systems, such a measurement system will require calibration and/or periodic recalibration. Such analysers are typically calibrated by passing one, two or more solutions containing the analytes to be measured in known concentrations across the sensor and recording the signal. By use of interpolation and extrapolation and taking into account the intrinsic response curve of the sensor, this may be used to construct a calibration curve of signal versus analyte concentration over the measurement range. When the signal from a sample is measured, the calibration curve is used to infer an analyte concentration.

The calibration curve is likely to change as a function of time, due to changing conditions of the sensor, e.g. chemical changes or physical changes, as previously explained. Recalibration may therefore be required. In many circumstances, the operator may calibrate the sensor during use just prior to exposing it to the substance being investigated and carrying out the desired measurement.

As a patient-attached micro-analyser may be sited in an intravascular (iv) line, e.g. an arterial or venous line, the analyser would ideally be calibrated with sterile calibration solutions, formulated in such a way to be safe for infusion into the patient's body, down the iv line either during calibration or after the calibration is completed. The calibration solution may also have the dual purpose of flushing the micro-analyser.

In such a situation the calibration solution would ideally be provided in a sterile pre-filled container with a form factor suitable for use in the intensive care environment. This presents some particular technical challenges, notably between the requirements to set the dissolved gas concentrations in the liquid to a desired level using a process, such as 'tonometry', and also to provide the solution in a sterile form.

Since normal bench-top blood gas analysers are not attached to the patient there is not normally any need to consider the biocompatibility and sterility of the calibration solution. Although many pre-filled calibration solutions exist, these solutions are not required to meet the levels of sterility assurance which are demanded for injectable products. However, patient-attached analysers, such as the example shown in Figure 1 require calibration solutions which are both sterile and contain known concentrations or partial pressures of the dissolved gases of interest, for example $O_2$ and $CO_2$. However, it is a problem that most sterilization techniques alter the partial pressures of the dissolved gases of interest. For instance, a common approach for sterilizing solutions for injection or infusion is to sterilise the entire container after it is packed and sealed. This is known as terminal sterilization. The most common mechanisms for sterilization of such solutions are steam treatment, e.g. autoclaving, or high energy sterilization such as gamma or e-beam irradiation.

Unfortunately, these terminal sterilization techniques may bring about changes in the dissolved gas concentration of the solution which can cause problems when trying to produce a sterile calibration solution with known dissolved gas concentrations. At first glance, high energy sterilization would not be expected to have a significant impact on dissolved gas concentrations. However, it has been well documented that gamma irradiation may trigger chemical reactions between analytes within a solution or between the lining of the package and the contents. Such reactions may bring about changes in dissolved oxygen concentration or chemically change some of the other solution contents. These changes can impact the very tight specifications of a calibration solution and affect the measurement accuracy.

Another option is to sterile fill, tonometered calibration solution into a pre-sterilized container. This process, known as sterile filling, avoids the need for a final terminal sterilization step and therefore reduces the risk of dissolved gas level changing. The disadvantage of this approach is that it is a relatively involved and therefore costly process. In addition, there is a risk that microbial contamination is introduced into the solution which either changes the composition of the calibration solution or poses a health hazard to the patient. As a consequence, there is a strong pressure from regulatory authorities to use terminal sterilization whenever possible.

There are several examples in patent literature that describe ways of maintaining the concentration of dissolved gases in a storage reservoir for use as calibration fluid in blood gas analysers. However, the calibration solutions which are used in blood gas analysers do not have to be sterile or biocompatible because the blood is not returned to the patient after analysis. The calibration solution for an in-line analyser, in particular a blood gas analyser, must however be both biocompatible and sterile. Hence, there exists a need for a method of providing a packaged sterile calibration solution having well-defined partial pressures of the dissolved gases of interest, which may be sterilized using terminal sterilization techniques.

SUMMARY OF THE INVENTION

The present invention seeks to provide a method of packaging a calibration solution which yields a sterile calibration solution in which the desired partial pressures of the dissolved gases of interest are maintained.

The present invention further seeks to provide a package comprising such a sterilized calibration solution.

According to a first aspect of the present invention, there is provided a method of packaging a calibration solution, comprising providing a gas-permeable container; filling the gas-permeable container with a calibration solution; sterilizing the filled gas-permeable container; providing a gas-impermeable container; placing the filled gas-permeable container in the gas-impermeable container; filling the gas-impermeable container with a gas composition comprising at least one gas having a predefined partial pressure in the gas composition; and sealing the gas-impermeable container.

This method has the advantage that the respective partial pressures of the one or more gases of interest in the calibration solution are not sensitive to the sterilization process because the desired partial pressures are achieved by process of equilibration between the gas composition in the gas-impermeable container, such as a laminated pouch having a gas barrier layer, a glass ampoule, a glass syringe, a metal canister and so on, and the calibration solution through the gas-permeable container such as a plastic syringe, pouch or ampoule. Any material having a relatively high permeability to the gas composition may be used. Particularly suitable materials include polyethylene and polypropylene.

In an embodiment, the method further comprises placing the sealed gas-impermeable container in a further gas-impermeable container; filling the further gas-impermeable container with said gas composition; and sealing the further gas-impermeable container. This reduces the risk of reduction of the shelf life of the calibration solution because of a leak in the gas-permeable container.

According to a further aspect of the present invention, there is provided a calibration solution package, comprising a sterile gas-permeable container comprising the calibration solution; and a sealed gas-impermeable container comprising the gas-permeable container and a gas composition comprising at least one gas having a predefined partial pressure in the gas composition.

Optionally, the volume of the gas composition is several times greater than the volume of the calibration solution such that the gas content of the calibration solution has a negligible volume compared to gas composition, such that the mixture is not altered by the different partial pressures of the one or more gases of interest dissolved in the calibration solution.

Alternatively, the molar quantity of the gas of interest in the packing gas may be significantly larger than the molar quantity of this gas dissolved in the solution. For instance, in the case of a gas with low solubility in the calibration solution, the volume of the packing gas may be similar to or even smaller than the volume of the calibration solution.

In an embodiment, the calibration solution package comprises a further sealed gas-impermeable container comprising the gas-impermeable container and the gas composition for the reasons previously explained.

BRIEF DESCRIPTION OF THE EMBODIMENTS

Embodiments of the invention are described in more detail and by way of non-limiting examples with reference to the accompanying drawings, wherein:

Fig.1 depicts an example of a patient-attached blood gas/electrolyte microanalyser; and
Fig.2 schematically depicts an embodiment of the method and package of the present invention.

DETAILED DESCRIPTION OF THE DRAWINGS

It should be understood that the Figures are merely schematic and are not drawn to scale. It should also be understood that the same reference numerals are used throughout the Figures to indicate the same or similar parts.

The invention is directed to a calibration solution for calibrating a sensor for measuring a blood value, in particular a dissolved gas, for instance $O_2$ or $CO_2$, although other dissolved gases may also be considered, and a method for manufacturing calibration solutions, in particular sterile calibration solutions, containing dissolved gases in well-known concentrations.

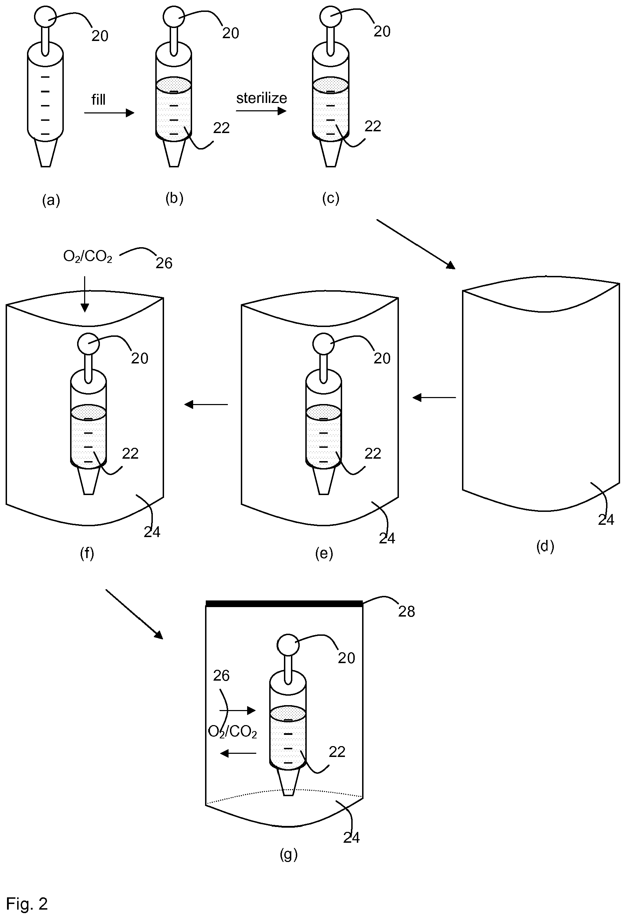

One possible calibration solution storage reservoir for an in-line BGA is a plastic disposable syringe 20, which is provided in a first step (a) of the method of the present invention as shown in Fig. 2. Syringes are easy to use, low cost and a familiar form factor for the intensive care environment. Other examples include ampoules or pouches. However any disposable container form could be used.

The calibration solution 22 is formulated with the appropriate concentration of all analytes other than the dissolved gases of interest and the pH is adjusted to the desired level. Many approaches to the formulation of calibration solutions are known; see for example US6599746 and the references contained therein. This will therefore not be further discussed for reasons of brevity only.

The compositions of biocompatible electrolytes employed as infusion solutions may be derived from the product descriptions of various pharmaceutical companies, for example, Pharmacia, Braun, Fresenius, Baxter, and so on.

The composition of blood or blood plasma with respect to the pH value and concentration of ions contained in the blood is described, for example, in Kortya, "Medical and Biological Applications of Electrochemical Devices", John Wiley & Sons, 1980, page 82.

The calibration solution 22 is filled into individual plastic syringes or other suitable containers, as shown in step (b), which are capped or closed and subsequently sterilized to yield a sterile calibration solution containing package as indicated in step (c).

In one preferred embodiment of the invention, the gas-permeable container 20, e.g. a syringe, filled with the calibration solution 22 is steam-sterilized. The syringe can be placed in a gas permeable / microbe impermeable bag for the sterilization step if required. The resulting syringes are sterile and contain the calibration solution, although the concentrations of the one or more dissolved gases at this point may be ambient and have not yet been set to the desired levels.

In order to obtain the desired concentrations of one or more dissolved gases of interest, a gas-impermeable container 24 is provided in step (d) and the gas-permeable container 20 filled with the sterile calibration solution 22 is placed into the gas impermeable container 24 in step (e). The gas-impermeable container 24 may for instance be a foil laminate pouch. The pouch, or other gas-impermeable container 24, is then filled with a gas composition 26, which will also be referred to as packing gas 26 in step (f) and sealed in step (g), such that the seal 28 prevents the gas composition 26 from escaping the gas-impermeable container 24.

The packing gas 26 contains the one or more gases of interest, for example, $O_2$ or $CO_2$, in certain concentrations, chosen such, that, after equilibration with the calibration solution 22 contained in the gas-permeable container 20, e.g. the syringe, the container contains a calibration solution 22 with the desired concentrations of the dissolved gases of interest. In the context of the present invention, the composition of the packing gas 26 may consist of one or more of the gases or interest, or may consist of a gas mixture including one or more of the gases of interest in addition to one or more further gases, e.g. inert gases.

Over a short period of time, the partial pressures of the one or more dissolved gases of interest, for example, $O_2$ or $CO_2$, inside the container equilibrates with the partial pressure of the respective gases in the gas composition 26. This equilibration takes place as the one or more dissolved gases of interest can diffuse through the material which makes up the container 20. Following equilibration, the calibration solution 22 is ready to be used.

In one particular embodiment of the invention, the material of the liquid storage vessel 20 is chosen to have a high permeability for the one or more dissolved gases of interest. This has the advantage that the equilibration will take place relatively quickly. Examples, of such material include polypropylene, polyethylene or other polymers from which disposable liquid storage vessels are made, and which have relatively high gas permeabilities with respect to $O_2$ and $CO_2$.

The material from which the gas-impermeable container 24 is formed should be relatively gas impermeable e.g. laminate foil / polymer which is widely used for packaging reagents, is cheap and easy to form. The use of foil laminates to store calibration solutions is widely known, and the manufacturing of such laminate pouches will therefore not be further discussed for reasons of brevity only.

In an embodiment of the invention, the foil laminate pouch is made up from multiple layers of plastic and also contains one or more metal layer. The metal layer, for example, an aluminum foil, forms a gas barrier that makes the container 24 particularly gas-tight. Another example for the outer packaging material is a glass ampoule or glass syringe. Yet another outer packaging material is a metal can. Other packing materials which have low gas permeability can also be used.

The method and package of the present invention will now be explained in even further detail by way of the following non-limiting examples:

Example 1:

A sterile calibration solution is to be manufactured which should contain an oxygen ($O_2$) partial pressure of 0.3 atm. In order to achieve this aim, a bio-compatible electrolyte is formulated in accordance with any of the compositions outlined in the references mentioned above. 10ml of this electrolyte are stored in a suitable syringe and capped off. This syringe is then steam-sterilized. Following steam-sterilization, the capped-off syringe is placed in an ambient environment of air at 25° C. This environment contains typically a partial pressure of $O_2$ of 0.21 atm. The syringe is allowed to cool down in this environment until it reaches an equilibrium temperature of 25° C and is kept in this environment until the gas compositions inside and outside the syringe have equilibrated. Subsequently, the syringe is placed inside a pouch made from a foil laminate having a multiple layer of plastic containing an aluminum layer. The volume of the pouch is chosen such that it contains 10ml of the packing gas 26 in addition to the capped off syringe, when filled with packing gas at a pressure of 1 atm. The pouch is flushed with the packing gas and is then filled with 10ml of the packing gas, whereby the packing gas contains a partial pressure of 0.303atm of $O_2$ and 0.697atm of other gases, for example $N_2$, He, Ar, $CO_2$, etc. After filling, the foil pouch is sealed, for example using a heat sealing process, and left to equilibrate at room temperature for several hours or days. Following the equilibration, the calibration solution will contain an oxygen partial pressure of 0.3atm.

In general, the partial pressure of a dissolved gas of interest in the packing gas 26 can be estimated in the following manner. Assuming that the gas adsorption of the dissolved gas of interest in the container material and outer packaging material is negligible and knowing

- the volume $V_s$ of the calibration solution in the container;
- the partial pressure $p_s$ of the dissolved gas of interest in the calibration solution after equilibration in the ambient environment;
- the solubility sol of the dissolved gas of interest in the calibration solution at temperature T;
- the temperature T of the ambient environment;
- the volume $V_p$ of the packing gas;
- the partial pressure $p_p$ of the gas of interest in the packing gas;

then the partial pressure p of the dissolved gas of interest in the calibration solution following the equilibration with the packing gas inside the outer packaging is given by

$$p = \frac{\dfrac{p_p \cdot V_p}{R \cdot T} + p_s \cdot sol \cdot V_s}{\dfrac{V_p}{R \cdot T} + sol \cdot V_s}$$

where R= 8.3145 J/mol K is the gas constant.

If required, the above equation can be refined to take into account the adsorption of the gas of interest in the material of the syringe or the outer packaging material.

In one particular example of the invention, the volumes of the outer packing and the packing gas are chosen such that the partial pressures of the one or more gases of interest in the packing gas 26 are substantially the same as the desired partial pressures of the respective gases dissolved in the calibration solution.

In another example of the invention, following sterilization, the syringe is placed in an environment which does not contain one or more of the gases of interest in the ambient atmosphere. After equilibration in this atmosphere, the syringe is placed into the outer packaging which is then filled with a packing gas of a suitable composition and left to equilibrate with the packing gas prior to use.

In yet another example of the invention, following sterilization, the syringe is placed in an environment which does contain the one or more gases of interest.

The partial pressures of the one or more gases of interest in this environment are measured. After equilibration in this atmosphere, the syringe is placed into the outer packaging which is then filled with a packing gas of a suitable composition and left to equilibrate with the packing gas prior to use. The composition of the packing gas is adjusted in accordance with the measurements of the partial pressures of the one or more gases of interest.

In a further example, the gas-impermeable container 24 is placed in an environment made up soleley of the gas or gases of interest; e.g. in the case of one gas of interest, the container is placed in an environment containing only the "pure" gas of interest. Combinations of the above examples are obviously also feasible.

In another preferred embodiment of the invention, the amount of the gas of interest (e.g. expressed as a molar quantity) contained within the packing gas 26 in the outer packaging is considerably larger than the amount of that gas dissolved in the volume of calibration solution 22 contained in the syringe. This is particularly advantageous as, in this case, the production process becomes relatively insensitive to the initial dissolved gas concentration in the calibration solution. Moreover, in these circumstances, the final partial pressure of the gas of interest in the calibration solution is also relatively independent of the volume of packing gas used to fill the outer packaging as long as the volume of packing gas is sufficiently large. This is particular advantageous since it may not be easy to accurately fill the pouch with a defined quantity of packing gas. Hence, in these circumstances, the outer packaging can be filled with packing gas above a minimum value.

Example 2:

A sterile calibration solution 22 is to be manufactured which should contain an oxygen partial pressure of 0.3atm. A bio-compatible electrolyte is formulated in accordance with any of the compositions outlined in the references mentioned above. 10ml of this electrolyte are stored in a suitable syringe and capped off. This syringe is then steam sterilized. Following steam-sterilization, the capped-off syringe is placed in an ambient environment of air at 25° C. This environment contains typically a partial pressure of $O_2$ of 0.21 atm. The syringe is allowed to cool down in this environment and is kept in this environment until the gas compositions inside and outside the syringe are equilibrated. Following equilibration, the calibration solution in the syringe contains a dissolved amount of $O_2$ of about 0.26mmol/l assuming a solubility of oxygen in the calibration solution of sol=1.25mmol/(l*atm).

Subsequently, the syringe is placed inside a pouch made from a foil laminate having a multiple layer of plastic containing an aluminum layer. The volume of the pouch is chosen such that it contains 100ml of the packing gas composition in addition to the capped off syringe, when filled with packing gas at a pressure of 1 atm. The pouch is flushed with the packing gas 26 and is then filled with 100ml of the packing gas 26, whereby the packing gas 26 contains a partial pressure of 0.3atm of $O_2$ and 0.7atm of other gases, for example $N_2$, He, Ar, $CO_2$, etc. After filling, the foil pouch is sealed, for example using a heat sealing process, and left to equilibrate at room temperature for several hours or days. Following the equilibration, the calibration solution 22 will contain an oxygen partial pressure of 0.3atm.

The volume of the pouch and packing gas 26 in the pouch can be adjusted over a wide range without significantly affecting the final partial pressure of oxygen of 0.3atm in the calibration solution. For example, volumes in the range of 50ml to 1000ml or beyond could be used.

While the invention has been primarily illustrated using $O_2$ or $CO_2$ as the gases of interest, it is equally applicable to other gases.

Should the calibration solution contain more than one gas of interest, the invention can also be applied to a mixture of these gases. In this case, the packing gas will comprise a mixture of these gases, such that the partial pressure of each gas of interest in the mixture follows the guidelines outlined above. The remainder of the packing gas is then made up from another gas, for example an inert gas, such as $N_2$, Ar or He; alternatively many other gases could be used.

Since there may be a small amount of leakage from heat sealed foil laminate pouches, it may be advantageous or necessary to pack the gas-impermeable container 24, e.g. a foil pouch, in another gas-impermeable container such as an additional pouch, also containing the packing gas 26 or a similar gas composition. It is particular advantageous if this additional pouch contains a gas composition whereby the partial pressure of each gas of interest is similar or the same as the desired partial pressure of that gas in the calibration solution. This approach will reduce the rate of gas leakage / diffusion from within the inner pouch and increase the shelf life of the calibration solution 22.

In summary, the present invention has, amongst other advantages, the following advantages over the prior art:

The sterilization process is decoupled from the tonometry. The sterilization can be carried out using standard processes, e.g. terminal sterilization, without the need to maintain any specific gas atmosphere.

While the invention has been illustrated primarily using steam sterilization, other sterilization process can be used, for example, high-energy approaches, such as gamma or e-beam irradiation. The invention can also be used in combination with sterile filling. Since the gas levels are adjusted after the sterilization, there is no risk of the sterilization process changing the partial pressure of the one or more dissolved gases of interest, for example $O_2$ and $CO_2$.

Steam sterilization can be used which is cost effective and the standard method of sterilizing IV solutions. Since the product is terminally sterilized, unlike a sterile fill process, there is very little risk of microbial contamination. Most regulatory authorities around the world strongly prefer injectables to undergo terminal sterilization wherever possible to reduce the risk of microbial contamination.

The relatively large molar amount of $O_2$ and $CO_2$ in the packing gas 26 also acts as a buffer to compensate for any $O_2$ and $CO_2$ which react with other components of the calibration solution 22, or the container 20 or packaging material 24.

Unlike many approaches which use means of preventing gas escape into or out from a reservoir of calibration solution, this method specifically takes advantage of the fact that the container 20 containing the calibration solution 22, for example a syringe, is relatively gas permeable.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

**Claims**

1. A method of packaging a calibration solution, comprising:

    (a) providing a gas-permeable container;
    (b) filling the gas-permeable container with a calibration solution;
    (c) sterilizing the filled gas-permeable container;
    (d) providing a gas-impermeable container;
    (e) placing the filled gas-permeable container in the gas-impermeable container;
    (f) filling the gas-impermeable container with a gas composition comprising at least one gas having a predefined partial pressure in the gas composition; and
    (g) sealing the gas-impermeable container.

2. The method of claim 1, wherein said sealing step comprises heat-sealing the gas-impermeable container.

3. The method of claim 1 or 2, wherein the gas-permeable container comprises a syringe.

4. The method of any of claims 1-3, wherein the gas-impermeable container comprises a foil pouch, said foil pouch comprising a gas barrier layer.

5. The method of any of claims 1-4, wherein the sterilizing step comprises steam sterilizing said filled gas-permeable container.

6. The method of any of claims 1-4, wherein the sterilizing step comprises sterilizing said filled gas-permeable container by means of electron beam or gamma radiation.

7. The method of any of claims 1-6, further comprising:

    (h) placing the sealed gas-impermeable container in a further gas-impermeable container;
    (i) filling the further gas-impermeable container with said gas composition; and
    (j) sealing the further gas-impermeable container.

8. The method of claim 1, wherein the gas-impermeable container comprises a metal canister.

9. A calibration solution package, comprising:

    a sterile gas-permeable container comprising the calibration solution; and
    a sealed gas-impermeable container comprising the gas-permeable container and a gas composition comprising at least one gas having a predefined partial pressure in the gas composition, **characterized in that** the gas-permeable container is a syringe.

10. The calibration solution package of claim 9, wherein the sealed gas-impermeable container is a foil pouch comprising a gas barrier layer.

11. The calibration solution package of claim 10, wherein the gas barrier layer comprises a metal foil layer.

12. The calibration solution package of claim 9, wherein the gas-sealed impermeable container is selected from the group comprising a metal canister, a glass ampoule and a glass syringe.

13. The calibration solution package of any of claims 9-11, further comprising a further sealed gas-impermeable container comprising the gas-impermeable container and the gas composition.

14. The calibration solution package of any of claims 9-13, wherein the gas-permeable container is made from one or more materials selected from the group consisting of polyethylene and polypropylene.

**Patentansprüche**

1. Verfahren zum Verpacken einer Kalibrierungslösung, umfassend:

   (a) Bereitstellen eines gasdurchlässigen Behälters;
   (b) Füllen des gasdurchlässigen Behälters mit einer Kalibrierungslösung;
   (c) Sterilisieren des gefüllten gasdurchlässigen Behälters;
   (a) Bereitstellen eines gasundurchlässigen Behälters;
   (e) Platzieren des gefüllten gasdurchlässigen Behälters in dem gasundurchlässigen Behälter;
   (f) Füllen des gasundurchlässigen Behälters mit einer Gaszusammensetzung, die zumindest ein Gas umfasst, das einen vorgegebenen Partialdruck in der Gaszusammensetzung aufweist; und
   (g) Versiegeln des gasundurchlässigen Behälters.

2. Verfahren nach Anspruch 1, wobei der Versiegelungsschritt das Heißversiegeln des gasundurchlässigen Behälters umfasst.

3. Verfahren nach Anspruch 1 oder 2, wobei der gasdurchlässige Behälter eine Spritze umfasst.

4. Verfahren nach einem der Ansprüche 1-3, wobei der gasundurchlässige Behälter einen Folienbeutel umfasst, wobei der Folienbeutel eine Gasbarriereschicht umfasst.

5. Verfahren nach einem der Ansprüche 1-4, wobei der Sterilisierungsschritt das Dampfsterilisieren des gefüllten gasdurchlässigen Behälters umfasst.

6. Verfahren nach einem der Ansprüche 1-4, wobei der Sterilisierungsschritt das Sterilisieren des gefüllten gasdurchlässigen Behälters durch Elektronenstrahlen oder Gamma-Strahlung umfasst.

7. Verfahren nach einem der Ansprüche 1-6, ferner umfassend:

   (h) Platzieren des versiegelten gasundurchlässigen Behälters in einem weiteren gasundurchlässigen Behälter;
   (i) Füllen des weiteren gasundurchlässigen Behälters mit der Gaszusammensetzung; und
   (j) Versiegeln des weiteren gasundurchlässigen Behälters.

8. Verfahren nach Anspruch 1, wobei der gasundurchlässige Behälter einen Metallkanister umfasst.

9. Kalibrierungslösungspackung, umfassend:

   einen sterilen gasdurchlässigen Behälter, der die Kalibrierungslösung umfasst; und
   einen versiegelten gasundurchlässigen Behälter, der den gasdurchlässigen Behälter und eine Gaszusammensetzung umfasst, die zumindest ein Gas umfasst, das einen vorbestimmten Partialdruck in der Gaszusammensetzung aufweist, **dadurch gekennzeichnet, dass** der gasdurchlässige Behälter eine Spritze ist.

10. Kalibrierungslösungspackung nach Anspruch 9, wobei der versiegelte gasundurchlässige Behälter ein Folienbeutel ist, der eine Gasbarriereschicht umfasst.

11. Kalibrierungslösungspackung nach Anspruch 10, wobei die Gasbarriereschicht eine Metallfolienschicht umfasst.

12. Kalibrierungslösungspackung nach Anspruch 9, wobei der versiegelte gasundurchlässige Behälter aus der Gruppe umfassend einen Metallkanister, eine Glasampulle und eine Glasspritze ausgewählt ist.

13. Kalibrierungslösungspackung nach einem der Ansprüche 9-11, die ferner einen weiteren versiegelten gasundurchlässigen Behälter umfasst, der den gasundurchlässigen Behälter und die Gaszusammensetzung umfasst.

14. Kalibrierungslösungspackung nach einem der Ansprüche 9-13, wobei der gasdurchlässige Behälter aus einem oder mehreren aus der Gruppe bestehend aus Polyethylen und Polypropylen ausgewählten Materialien hergestellt ist.

**Revendications**

1. Méthode de conditionnement d'une solution d'étalonnage, comprenant :

   (a) fourniture d'un récipient perméable aux gaz ;
   (b) remplissage du récipient perméable aux gaz avec une solution de calibrage ;
   (c) stérilisation du récipient perméable aux gaz rempli ;
   (d) fourniture d'un récipient imperméable aux gaz ;
   (e) introduction du récipient perméable aux gaz rempli dans le récipient imperméable aux gaz ;
   (f) remplissage du récipient imperméable aux gaz avec une composition de gaz comprenant au moins un gaz présentant une pression partielle prédéfinie dans la composition de gaz ; et

(g) scellement du récipient imperméable aux gaz.

2. Méthode selon la revendication 1, ladite étape de scellement comprenant le thermo-scellement du récipient imperméable aux gaz.

3. Méthode selon la revendication 1 ou 2, le récipient perméable aux gaz comprenant une seringue.

4. Méthode selon une quelconque des revendications 1 à 3, le récipient imperméable aux gaz comprenant une pochette en feuille métallique, ladite pochette en feuille métallique comprenant une couche de barrière aux gaz.

5. Méthode selon une quelconque des revendications 1 à 4, l'étape de stérilisation comprenant la stérilisation à la vapeur dudit récipient perméable aux gaz rempli.

6. Méthode selon une quelconque des revendications 1 à 4, l'étape de stérilisation comprenant la stérilisation dudit récipient perméable aux gaz par le biais d'un faisceau électronique ou d'un rayonnement gamma.

7. Méthode selon une quelconque des revendications 1 à 6, comprenant également :

(h) l'introduction du récipient imperméable aux gaz scellé dans un autre récipient imperméable aux gaz ;
(i) le remplissage de l'autre récipient imperméable aux gaz avec ladite composition de gaz ; et
(j) le scellement de l'autre récipient imperméable aux gaz.

8. Méthode selon la revendication 1, le récipient imperméable aux gaz comprenant un boîtier métallique.

9. Conditionnement pour solution de calibrage, comprenant :

un récipient perméable au gaz stérile comprenant la solution de calibrage ; et
un récipient scellé imperméable au gaz comprenant le récipient perméable au gaz et une composition de gaz comprenant au moins un gaz à pression partielle prédéfinie dans la composition de gaz, **caractérisé en ce que** le récipient perméable au gaz est une seringue.

10. Conditionnement pour solution de calibrage selon la revendication 9, le récipient imperméable aux gaz scellé étant une pochette en feuille métallique comprenant une couche de barrière au gaz.

11. Conditionnement pour solution de calibrage selon la revendication 10, la couche de barrière au gaz comprenant une couche en feuille métallique.

12. Conditionnement pour solution de calibrage selon la revendication 9, le récipient imperméable aux gaz scellé étant sélectionné dans le groupe composé d'un boîtier métallique, d'une ampoule de verre et d'une seringue de verre.

13. Conditionnement pour solution de calibrage selon une quelconque des revendications 9 à 11, comprenant en outre un autre récipient scellé imperméable aux gaz comprenant le récipient imperméable aux gaz et la composition de gaz.

14. Conditionnement pour solution de calibrage selon une quelconque des revendications 9 à 13, le récipient perméable aux gaz étant réalisé avec un ou plusieurs matériaux du groupe composé de polyéthylène et de polypropylène.

FIG. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6599746 B

**Non-patent literature cited in the description**

- **KORTYA.** Medical and Biological Applications of Electrochemical Devices. John Wiley & Sons, 1980, 82